**Europäisches Patentamt**

**European Patent Office**

**Office européen des brevets**

(19)

(11) Veröffentlichungsnummer : **0 128 523**
**B1**

(12) # EUROPÄISCHE PATENTSCHRIFT

(45) Veröffentlichungstag der Patentschrift :
07.09.88

(51) Int. Cl.⁴ : **F 02 D 41/04, F 02 D 37/02**

(21) Anmeldenummer : 84106457.9

(22) Anmeldetag : 06.06.84

(54) **Verfahren zum Betrieb einer Brennkraftmaschine.**

(30) Priorität : 09.06.83 DE 3320895

(43) Veröffentlichungstag der Anmeidung :
19.12.84 Patentblatt 84/51

(45) Bekanntmachung des Hinweises auf die Patenterteilung : 07.09.88 Patentblatt 88/36

(84) Benannte Vertragsstaaten :
**DE FR GB IT SE**

(56) Entgegenhaitungen :
**DE-A- 2 941 977**
**US-A- 4 178 891**
**US-A- 4 200 064**
**US-A- 4 201 164**
**Bosch,"L-Jetronic",S.15,20,21, 1. Ausgabe, 1981, Stuttgart (DE); Bosch,"K-Jetronic",S.20, 2. Ausgabe, 1978, Stuttgart (DE)**

(73) Patentinhaber : **BAYERISCHE MOTOREN WERKE**
**Aktiengesellschaft**
**Postfach 40 02 40 Petuelring 130 - AJ-36**
**D-8000 München 40 (DE)**

(72) Erfinder : **Salzer, Lorenz, Dipl.-Ing.**
**Amalienstrasse 16**
**D-8035 Gauting (DE)**

(74) Vertreter : **Bullwein, Fritz**
**Bayerische Motoren Werke Aktiengesellschaft Postfach 40 02 40 Petuelring 130 AJ-33**
**D-8000 München 40 (DE)**

## Beschreibung

Die Erfindung bezieht sich auf ein Verfahren nach dem Oberbegriff des Patentanspruchs 1.

Ein derartiges Verfahren ist aus der Zeitschrift « Technische Unterrichtung, L-Jetronic » der Fa. Bosch vom April 1918, Seite 15-21 bekannt. Dabei wird mit Hilfe eines Luftdurchsatzmessers und eines Steuergeräts der optimale, verbrauchsgünstige Betriebspunkt des Zündzeitpunkts und der Kraftstoffzumessung bei stationären Betriebspunkten bestimmt. Bei instationärem Betrieb, d. h. bei Beschleunigung, wird durch das Überschwingen der Stauklappe eine größere Luftmenge gemeldet als tatsächlich zur Verbrennung gelangt. Es wird daher mehr Kraftstoff als für den verbrauchsgünstigen Betrieb nötig eingespritzt.

Das Problem, mit dem sich die Erfindung beschäftigt, resultiert aus dem Aufbau bzw. der Wirkungsweise des Luftdurchsatzmessers bei derartigen Verfahren.

Ein häufig verwendeter Luftmengenmesser, der nach Art einer Stauklappe arbeitet, führt bei jeder Änderung des Luftdurchsatzes eine Schwingung um seine jeweils neue Endlage aus. Ursache hierfür ist der mechanische Aufbau, bei dem eine Federkraft die Stauklappe im Gleichgewicht mit der von der strömenden Luft ausgeübten Kraft ist. Das Ausgangssignal des Luftdurchsatzmessers führt somit bei jeder Änderung des Luftdurchsatzes eine entsprechende gedämpfte Schwingung durch mit der Folge, daß auch die Kraftstoff-Zumeßvorrichtung eine entsprechend variierende Kraftstoffmenge zuführt. Dieses Problem tritt auch bei Luftdurchsatzmessern auf, die nach anderen Prinzipien aufgebaut sind. Hierbei handelt es sich beispielsweise um einen elektrischen Luftmassensensor, der auf einer Regelung einer elektrischen Größe wie Spannung oder Stromstärke beruht. Ursache für dieses Problem ist stets die Trägheit derartiger Luftdurchsatzmesser, wie im Gegensatz zu der Forderung nach einer verzögerungsfreien und exakten Reaktion auf Änderungen des Luftdurchsatzes steht.

Die Auswirkungen dieses Problems führen zu einer Verbreiterung des Toleranzbandes für die Wahl des Betriebspunktes der Brennkraftmaschine. Das Toleranzband ist somit im stationärem Betriebsfall durch die üblichen Serientoleranzen und im instationärem Betriebsfall zusätzlich durch die Auswirkungen des geschilderten Problems bestimmt. Unter Betriebspunkt ist dabei die Wahl der Parameter Gemischzusammensetzung ($\lambda$) und Zündwinkel ($\alpha_z$) zu verstehen. Für jede Kombination von Drehmoment und Drehzahl ist die im Hinblick auf die Optimierung, d. h. Minimierung des spezifischen Kraftstoffverbrauchs angestrebte relativ magere Gemischeinstellung der Brennkraftmaschine — charakteristische Werte von $\lambda$ sind größer als 1 — durch zwei weitere Einflußgrößen bestimmt. Die eine ist die bei großem $\lambda$ in Richtung kleineres $\lambda$, d. h. fetteres Gemisch liegende Klopfgrenze und die andere ist die in Richtung größeres $\lambda$ d. h. mageres Gemisch liegende Laufgrenze bestimmt.

Der Erfindung liegt die Aufgabe zugrunde, ein Verfahren der eingangs genannten Art zu schaffen, bei dem der Betrieb unter allen Betriebsbedingungen frei von Fahrfehlern verbrauchsoptimal gestaltet ist. Unter Fahrfehler sind dabei die Betriebszustände zu verstehen, bei denen die Klopf-bzw. Laufgrenze der Brennkraftmaschine überschritten wird.

Die Erfindung löst diese Aufgabe durch die kennzeichnenden Merkmale des Patentanspruchs 1.

Die Erfindung basiert darauf, daß zwischen dem stationären und dem instationären Betriebsfall der Brennkraftmaschine unterschieden wird. Da im stationären Betriebsfall nur die sich aus den Serientoleranzen des Luftmengenmessers und der Kraftstoff-Zumeßvorrichtung ergebende Breite des Toleranzbandes für das Kraftstoff-Luftverhältnis einen, bezogen auf den instationären Betriebsfall, relativ geringen Wert besitzt, kann der Betriebspunkt an oder in der Nähe der verbrauchsoptimalen Stelle gewählt werden. Dieser Betriebspunkt wird dabei so eingestellt, daß das Toleranzband die Klopf- und die Laufgrenze gerade nicht überschreitet. Im instationären Betriebsfall hingegen ist das Toleranzband aufgrund des eingangs geschilderten Problems verbreitert, so daß bei festgehaltenem Betriebspunkt diese Grenzen überschritten würden. Im instationären Betriebsfall wird somit der Betriebspunkt so gewählt, daß das dann vergrößerte Toleranzband an eine der bzw. beiden Grenzen stößt. Am Ende des instationären Betriebsfalls wird erneut ein Betriebspunkt gewählt, der an bzw. nahe der verbrauchsoptimalen Stelle liegt.

Abhängig vom Verlauf der beiden Grenzen und in Abhängigkeit von der Gemischeinstellung und dem Zündzeitpunkt kann mit der Veränderung des Betriebspunkts zwischen dem stationären und dem instationären Betriebsfall und umgekehrt eine Verstellung des Zündzeitpunkts in Richtung « spät » verbunden sein. Diese Möglichkeit ist gegenüber der alternativen Klopfregelung günstiger sowohl von Seiten des Aufwands — auf eine Klopfregelung kann dann verzichtet werden — als auch von Seiten der Motorbelastung, da das für das Ansprechen der Klopfregelung erforderliche Klopfen der Brennkraftmaschine dabei völlig vermieden wird.

Besonders wirkungsvoll ist diese Zurücknahme des Zündzeitpunkts dann, wenn sie gleichmäßig synchron mit der Veränderung des Kraftstoff-Luft-Verhältnisses vorgenommen wird. Im Gegensatz zu einer stufenweisen oder mit dem Verlauf der Änderung dieses Verhältnisses nicht abgestimmten Zündwinkelrücknahme läßt sich dabei während des gesamten instationärem Betriebsfalls der Betriebspunkt auf oder in der Nähe der Kurve des jeweiligen Zündwinkelbestwertes halten. Dieser Bestwert ist durch das jeweilige Verbrauchsoptimum bestimmt.

Die Verbreiterung des Toleranzbandes ist, wie für einen schwingungsfähigen mechanischen Luftmengenmesser ohne weiteres sofort einsichtig, um so größer, je größer die Änderungsrate des Luftdurchsatzes bzw. der Initialimpuls der Störung ist. Sie ist bei maximalem Beschleunigungswunsch am größten. Dieser Fall wird üblicherweise durch eine sogenannte Beschleunigungsanreicherung in Form einer schlagartigen Zugabe einer Zusatzkraftstoffmenge berücksichtigt. Die folge dieser hohen Luftdurchsatz-Änderungsrate ist neben einer erheblichen Beeinträchtigung des Fahrkomforts ein durch das Schwingungsverhalten des Luftdurchsatzmessers bedingtes starkes Überschwingen des für die Kraftstoff-Zumeßvorrichtung maßgeblichen Luftdurchsatzmessersignals. Wird, wie allgemein üblich, nicht zwischen dem stationären und dem instationären Betriebsfall unterschieden, so bestimmt letztendlich dieser Extremfall die Wahl des Betriebspunkts und führt dazu, daß dieser relativ weit von der verbrauchsoptimalen Stelle entfernt liegt.

In Verbindung mit der erfindungsgemäßen Unterscheidung zwischen dem stationären und dem instationären Betriebsfall läßt sich die Auswirkung einer derartigen extremen und den tatsächlichen Verhältnissen nicht gerecht werdende Änderung des Luftdurchsatzmessersignals unter gleichzeitiger wesentlicher Verbesserung des Fahrkomforts auf verschiedene Weise vermeiden. Hierzu gehören die Gestaltung der Beschleunigungsanreicherung mit einem trapez- oder glockenförmigen Verlauf. Dadurch kann die Beschleunigungsanreicherung dem Verlauf und insbesondere dem Abklingverhalten dieses Signals angepaßt werden.

Eine weitere Möglichkeit besteht darin, die Beschleunigungsanreicherung linear proportional dem jeweiligen Beschleunigungswunsch, gegebenenfalls unter Begrenzung auf einen Höchstwert, einzustellen. Schließlich kann die Beschleunigungsanreicherung auch linear proportional dem Kraftstoff-Luft-Verhältnis gewählt werden. Da der verbrauchsoptimale Betriebspunkt der Brennkraftmaschine bei hohen Werten von $\lambda$, d. h. extrem magerem Gemisch liegt, wird die Beschleunigungsanreicherung bei magerem Gemisch relativ groß und bei fetterem Gemisch kleiner. Dadurch wird die Beschleunigungsanreicherung an den Bedarf angepaßt und somit ein optimales Betriebsverhalten der Brennkraftmaschine erreicht.

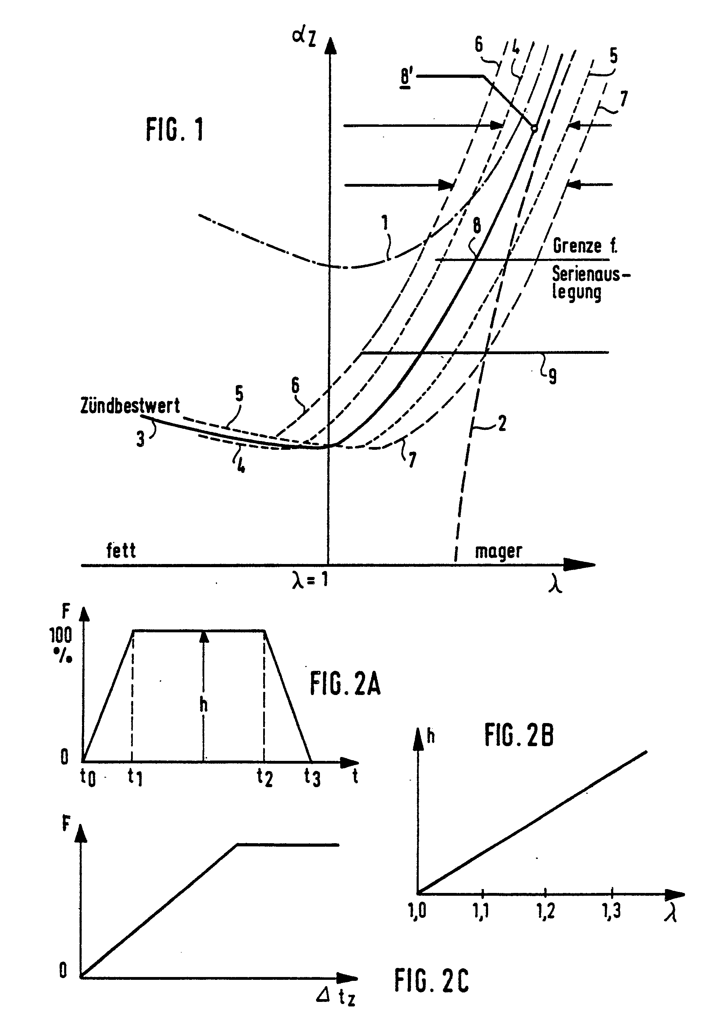

Die Erfindung ist anhand der Zeichnung weiter erläutert. Dabei zeigen die Fig. 1 bis 3 anhand von Diagrammen die wesentlichen Eigenschaften einer Brennkraftmaschine, die nach dem erfindungsgemäßen Verfahren bzw. dessen Weiterbildungen arbeitet.

Das in Fig. 1 dargestellte Diagramm zeigt für beliebig vorgegebene Werte von Drehmoment und Drehzahl anhand der Parameter $\lambda$ für das Kraftstoff-Luft-Verhältnis und $\alpha_z$ für den Zündwinkel die mögliche Wahl der Betriebspunkte. Der nutzbare Bereich ist durch die Klopfgrenze 1 und die Laufgrenze 2 begrenzt. Eine mit « Zündbestwert » bezeichnete Kurve 3 gibt die Zündwinkel wieder, bei denen für den jeweiligen Wert des Kraftstoff-Luft-Verhältnisses ein Verbrauchsminimum vorliegt. Die Kurve 3 wiederum enthält einen Punkt 8', an denen der spezifische Verbrauch sein absolutes Minimum besitzt.

Unter Berücksichtigung von Serientoleranzen ergibt sich zu jedem Punkt der Kurve 3 ein Toleranzband, das im wesentlichen nur in bzw. entgegen der Richtung des Parameters $\lambda$ verläuft, während ggf. auftretende toleranzbedingte Änderungen des Zündwinkels $\alpha_z$ ohne Bedeutung sind. Das Toleranzband in $\lambda$-Richtung ist von der Betriebsart der Brennkraftmaschine abhängig. Bei stationärem Betrieb ist es relativ gering und durch die zur Kurve 3 parallelen Kurven 4 und 5 tendenzmäßig dargestellt. Ursache hierfür ist die unterschiedliche zugemessene Kraftstoffmenge aufgrund von Toleranzen der entsprechenden Vorrichtung und die Bauteiletoleranz des Luftdurchsatzmessers, bei dem es sich beispielsweise um eine Stauklappe oder einen Hitzdraht handelt.

Im instationären Betriebsfall wird das Toleranzband um die Kurve 3 noch durch den erheblichen Einfluß des Schwingungsverhaltens des Luftdurchsatzmessers vergrößert. Dieser Einfluß ist durch parallele Kurven 6 und 7 zur Kurve 3 schematisch dargestellt. Die Kurve 7 repräsentiert den Extremfall bei größmöglichem Beschleunigungswunsch des Fahrers.

Gemäß der vorliegenden Erfindung soll der Betriebspunkt der Brennkraftmaschine möglichst nahe am Punkt 8' gewählt werden. Aus dem Diagramm ergibt sich, daß im stationären Betriebsfall der Betriebspunkt etwa an einer Stelle 8 gewählt werden kann. Dieser Punkt ergibt sich hinsichtlich seines Wertes $\alpha_z$ aus dem Schnittpunkt der Kurve 5 und der Laufgrenze 2. Dieser Betriebspunkt unterscheidet sich vom idealen Betriebspunkt 8' in seinem spezifischen Kraftstoffverbrauch nur gering.

Im instationären Betriebsfall kann der Betriebspunkt nicht an der Stelle 8 beibehalten werden, da dann die Kurven 6 und 7 bzw. bei gegenüber dem Extremfall kleineren Beschleunigungswunsch des Fahrers zwischen diesen Kurven und den Kurven 4 und 5 liegende Kurven maßgeblich sind. Dies führt dazu, daß der Betriebspunkt im instationären Fall beispielsweise auf oder in der Nähe einer Linie 9 gewählt werden muß, deren Höhe aus dem Schnittpunkt der Kurve 7 und der Laufgrenze 2 bestimmt wird.

Bei Übergang zwischen dem stationären und dem instationären Betriebsfall kann eine Änderung des Zündwinkels in Richtung « spät » gleichsinnig synchron mit der Änderung des Kraftstoff-Luft-Gemischs vorgenommen werden. Bei Beendigung des instationärem Vorgangs wird erneut ein dem Ausgangspunkt 8 entsprechender Punkt auf dem dann maßgeblichen Diagramm für den Zündwinkel in Abhängigkeit von dem Kraftstoff-Luft-Gemisch bei den dann vorliegenden Werten für Drehzahl und Drehmoment angefahren. Hierzu wird der Zündzeitpunkt wieder in Richtung « früh » und das Gemisch in Richtung mager, d. h. höheres λ, verstellt.

Während die Verstellung des Zündzeitpunkts relativ problemlos, beispielsweise mit Hilfe einer Änderung des Zündwinkels gleichsinnig synchron mit der Gemischzusammensetzung, vorgenommen werden kann, ist die Veränderung des Kraftstoff-Luft-Vehältnisses in besonderer Weise an die zugrundeliegende Problemstellung angepaßt. Die Begrenzungskurven 6 und 7 für den instationären Betriebsfall sind um so weiter von der Zündbestwert-Kurve 3 entfernt, je größer die Änderungsrate der Gemischzusammensetzung ist. Diese Rate ist näherungsweise proportional der Änderung des Luftdurchsatzmessersignals. Es ist daher anzustreben, die während des instationären Betriebsfalls auftretenden Änderungen des Kraftstoff-Luft-Gemischs möglichst zu vergleichmäßigen, da dann die Abweichung des während des instationären Betriebsfall auftretenden maximal entfernten Betriebspunkts entsprechend dem Punkt 9 vom Ausgangspunkt 8 auf das kleinstmögliche Maß beschränkt werden kann.

Dies wird erreicht durch eine besondere Wahl der Beschleunigungsanreicherung, die in Fig. 2 anhand der Diagramme a bis c dargestellt wird.

Das Diagramm 2a zeigt den zeitlichen Verlauf des für die Beschleunigungsanreicherung maßgeblichen Faktors F. Dieser durchläuft eine trapezförmige Kurve, die durch durch einen endlichen Anstieg und einen endlichen Abfall sowie ein variables Maximum geprägt ist. Der Betriebpunkt kann damit relativ nahe an dem Ausgangsbetriebspunkt 8 gehalten werden. Die variable Höhe h des Trapezes ist abhängig von der Größe des Wertes λ zu Beginn des instationären Betriebs und diesem Wert direkt proportional. Diese Abhängigkeit kommt im Diagramm 2b zum Ausdruck und beruht auf dem Umstand, daß eine um so größere Anfettung erforderlich ist, je größer das Kraftstoff-Luft-Verhältnis im vorhergehenden stationärem Betrieb ist.

Schließlich zeigt das Diagramm in Fig. 2c den maximalen Faktor F in Abhängigkeit von dem Beschleunigungswunsch. Damit wird dem Umstand Rechnung getragen, daß leichte Beschleunigung wenig Beschleunigungsanreicherung, starke Beschleunigung hingegen viel verlangt und die Größe des Initialstörimpulses der Beschleunigungsanreicherung entspricht. Dabei ist der Faktor F über der Änderung $\Delta$ eines Lastsignals $t_z$ aufgetragen. Das Lastsignal seinerseits hängt mit dem Luftdurchsatzmessersignal direkt zusammen.

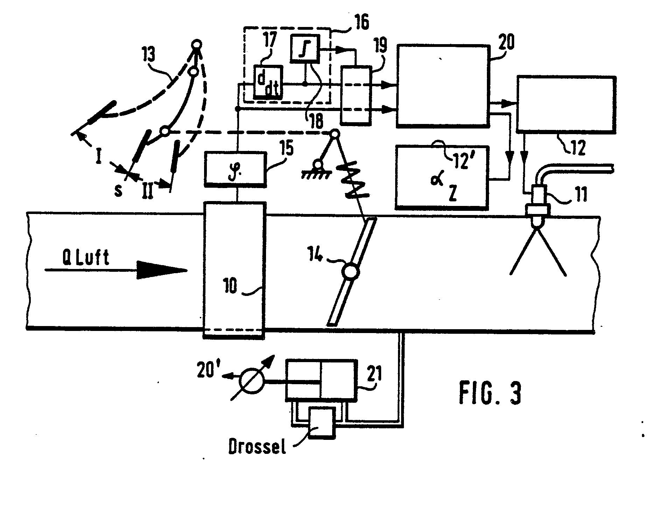

Die Fig. 3 zeigt eine Schaltungsanordnung, mit der das erfindungsgemäße Verfahren realisiert werden kann. Eine nicht im einzelnen dargestellte Brennkraftmaschine enthält einen Luftdurchsatzmesser nach Art einer Stauklappe 10 für die zügeführte Verbrennungsluft, eine davon gesteuerte Kraftstoff-Zumeßvorrichtung in Form von Einspritzdüsen 11 mit zugehörigem Steuergerät 12 sowie eine Zundzeitpunkt-Einstellvorrichtung 12'. Die zugeführte Verbrennungsluft wird durch eine Drosselklappe 14 gesteuert, die direkt oder indirekt mit einem Beschleunigungspedal 13 des Kraftfahrzeugs verbunden ist. An der Stauklappe 10 ist ein Winkelgeber 15 angeordnet, dessen Ausgangssignal die Winkelstellung dieser Klappe wiedergibt.

Das Ausgangssignal des Winkelgebers 15 ist über eine Erkennungsstufe 16 geführt, die im wesentlichen eine Differenzierstufe 17 mit nachgeschaltetem Schwellwertschalter 18 beinhaltet. Überschreitet das Ausgangssignal der Differenzierstufe 17 den durch den Schwellwertschalter 18 festgelegten Wert, d. h. ist die Änderung des Stauklappenwinkels größer als ein vorgegebenes Maß, so wird durch den Schwellwertschalter 18 eine Torschaltung 19 geöffnet und das Ausgangssignal der Differenzierstufe 17 zusammen mit dem des Winkelgebers 15 an eine Verarbeitungseinheit 20 weitergegeben, an der das Steuergerät 12 und die Einstellvorrichtung 12' angeschlossen sind.

In der Verarbeitungseinheit sind Kennfelder bzw. -linien abgespeichert, die den in den Fig. 1 und 2a bis 2c dargestellten Kurven entsprechen. Dabei sind Kennfelder entsprechend Fig. 1 für sämtliche möglichen Wertepaare von Drehmoment und Drehzahl vorhanden.

Entsprechend den gespeicherten Kennfeldern werden zu jedem Wertepaar für Drehmoment und Drehzahl für den stationären Betriebsfall und für den entsprechend dem Ausgangssignal der Differenzierstufe 17 festgelegten instationären Betriebsfall die erforderlichen Korrekturen des Zündzeitpunkt und des Kraftstoff-Luft-Verhältnisses vorgenommen.

Anstelle des Winkelgebers 15 mit nachgeschalteter Differenzierstufe 17 kann beispielsweise auch eine von Saugrohrunterdruck beaufschlagte Differenzierdose 21 (Variometer) mit elektrischer Auswertung verwendet werden.

Damit wird es möglich, beim stationären Betriebsfall einen Betriebspunkt in der Nähe oder an der Stelle des optimalen Betriebspunkts 8' (Fig. 1) zu wählen, wie es die Serientoleranzen zulassen, und im instationären Betriebsfall sich von diesem Betriebspunkt nur soweit zu entfernen, wie dies durch den Schwingungseinfluß des Luftdurchsatzmessers bedingt erforderlich ist. Damit ergibt sich eine über den gesamten Betrieb der Brennkraftmaschine verbrauchsoptimale Einstellung des Kraftstoff-Luft-Gemisches und des Zündzeitpunkts.

**Patentansprüche**

1. Verfahren zum Betrieb einer Brennkraftmaschine, die einen Luftdurchsatzmesser für die zugeführte Verbrennungsluft und eine davon gesteuerte Kraftstoff-Zumeßvorrichtung mit Serientoleranzen und eine Zündzeitpunkt-Einstellvorrichtung besitzt und bei der bei instationärem Betrieb der Betriebspunkt von einer zumindest annähernd verbrauchsoptimalen Stelle aus durch eine Kraftstoffzusatzmenge in einen verbrauchsungünstigeren Bereich verlegt wird, dadurch gekennzeichnet, daß der Betriebspunkt bei instationärem Betrieb so gewählt ist, daß das sich dann durch die Serientoleranzen des Luftdurchsatzmessers und der Kraftstoff-Zumeßvorrichtung ergebende verbreiterte Toleranzband für das Kraftstoff-Luftverhältnis an die Klopf- oder die Laufgrenze stößt und daß bei erneutem stationärem Betrieb der Betriebspunkt entsprechend der Ausgangsstelle eingestellt wird.

2. Verfahren nach Anspruch 1, dadurch gekennzeichnet, daß während des instationärem Betriebs der Zündzeitpunkt reversibel in Richtung Spätzündung verschoben wird.

3. Verfahren nach Anspruch 2, dadurch gekennzeichnet, daß der Zündzeitpunkt gleichmäßig synchron mit der Veränderung des Kraftstoff-Luft-Verhältnisses verschoben wird.

4. Verfahren nach einem der Ansprüche 1 bis 3, dadurch gekennzeichnet, daß die Kraftstoffzusatzmenge zeitlich entsprechend einem trapez- oder glockenförmigen Verlauf zugeführt wird.

5. Verfahren nach Anspruch 4, dadurch gekennzeichnet, daß die zeitlich maximale Kraftstoffzusatzmenge proportional dem Kraftstoff-Luft-Verhältnis der Ausgangsstelle gewählt wird.

## Claims

1. A method of operating an internal combustion engine which has an air throughput meter for the supplied combustion air and a fuel-metering device controlled thereby with serial tolerances and an ignition timing adjuster, and wherein the operating point is displaced from a position which is at least approximately optimum as regards fuel consumption into a less favourable range as regards fuel consumption by an additional quantity of fuel in the case of non-steady operation, characterised in that the operating point is so selected in the case of non-steady operation that the widened tolerance band for the fuel-air ratio, resulting then from the serial tolerances of the air-throughput meter and the fuel-metering device, collides with the knock limit or the running limit, and that, on renewed steady operation, the operating point is adjusted according to the initial position.

2. A method according to Claim 1, characterised in that, during the non-steady operation, the moment of ignition is shifted reversibly in the direction of late ignition.

3. A method according to Claim 2, characterised in that the moment of ignition is shifted uniformly in synchronism with the variation of the fuel-air ratio.

4. A method according to any one of Claims 1 to 3, characterised in that the additional fuel quantity is fed with respect to time in accordance with a curve of trapezium or bell form.

5. A method according to Claim 4, characterised in that the maximum additional fuel quantity with respect to time is selected so as to be proportional to the fuel-air ratio of the initial position.

## Revendications

1. Procédé d'exploitation d'un moteur à combustion interne qui possède un mesureur de débit d'air pour l'air de combustion apporté et un dispositif d'apport contrôlé de carburant commandé par le dispositif précédent avec des tolérances de série et un système de réglage du point de fonctionnement dynamique, et sur lequel, en régime transitoire, ce point de fonctionnement dynamique est reporté à partir d'une position au moins voisine de la consommation optimale par une quantité additionnelle de carburant dans un domaine de consommation satisfaisante, caractérisé en ce que le point de fonctionnement dynamique en régime transitoire est choisi de telle sorte que la bande élargie de tolérances pour le rapport air-carburant s'obtenant par les tolérances de série du mesureur de débit d'air et du dispositif d'apport contrôlé de carburant bute sur la limite de pouvoir détonnant ou la limite de course, et en ce que, lors d'un nouveau régime permanent, le point de fonctionnement dynamique est réglé de façon correspondante à la position de départ.

2. Procédé selon la revendication 1, caractérisé en ce qu'en régime transitoire, le moment de l'allumage est déplacé de façon réversible dans le sens d'un retard d'allumage.

3. Procédé selon la revendication 2, caractérisé en ce que le moment de l'allumage est déplacé simultanément de façon synchrone avec la variation du rapport air-carburant.

4. Procédé selon l'une des revendications 1 à 3, caractérisé en ce que les quantités additionnelles de carburant sont amenées en fonction du temps selon un tracé en forme de trapèze ou de cloche.

5. Procédé selon la revendication 4, caractérisé en ce que la quantité additionnelle de carburant maximale dans le temps est choisie proportionnellement au rapport air-carburant de la position initiale.

FIG. 1

8'

6 4 5 7

1

8

Grenze f.
Serienauslegung

9

Zündbestwert
5 6
3
4 7

2

fett

mager

$\lambda = 1$

$\lambda$

$\alpha_Z$

F
100
%

h

0

$t_0$ $t_1$ $t_2$ $t_3$ t

FIG. 2A

h

FIG. 2B

1,0 1,1 1,2 1,3 $\lambda$

F

0

$\Delta t_Z$

FIG. 2C

1

FIG. 3